# EUROPÄISCHE PATENTSCHRIFT

(11) **EP 2 406 002 B1**
(45) Veröffentlichungstag und Bekanntmachung des Hinweises auf die Patenterteilung: **09.05.2018**
(21) Anmeldenummer: 10714571.6
(22) Anmeldetag: 12.03.2010
(51) Int. Cl.: B01J 13/14, B01J 13/20

(54) **VERBESSERTE MIKROKAPSELN UND IHRE HERSTELLUNG**
IMPROVED MICROCAPSULES, AND PRODUCTION THEREOF
MICROCAPSULES AMÉLIORÉES ET LEUR FABRICATION

(30) Priorität: 12.03.2009 DE 102009012455
(43) Veröffentlichungstag der Anmeldung: 18.01.2012
(73) Patentinhaber: Follmann GmbH & Co. KG, 32423 Minden (DE)
(72) Erfinder: LAST, Klaus, 37520 Osterode (DE); MUES, Daniel, 31633 Leese (DE)
(74) Vertreter: von Renesse, Dorothea
(86) Internationale Anmeldenummer: PCT/EP2010/001572
(87) Internationale Veröffentlichungsnummer: WO 2010/102830

(56) Entgegenhaltungen:
- EP-A1- 0 026 914
- EP-A1- 0 978 312
- EP-A1- 1 033 378
- EP-A2- 1 236 464
- EP-A2- 1 797 946
- WO-A1-2006/032019
- CA-A- 882 175
- GB-A- 1 603 448
- US-A- 3 576 660
- US-A- 3 726 803
- US-A- 3 755 190
- US-A- 4 601 863
- US-A1- 2007 138 672
- US-A1- 2008 169 006
- BOUHAMED H ET AL: "Alumina interaction with AMPS-MPEG random copolymers", JOURNAL OF COLLOID AND INTERFACE SCIENCE, ACADEMIC PRESS, NEW YORK, NY, US, Bd. 261, Nr. 2, 15. Mai 2003 (2003-05-15), Seiten 264-272, XP027457372, ISSN: 0021-9797, DOI: DOI:10.1016/S0021-9797(03)00100-0 [gefunden am 2003-05-15]

## Beschreibung

Die Erfindung betrifft Mikrokapseln, deren Kapselwände ein Harz umfassen, welches durch Umsetzung mindestens eines aromatischen Alkohols und mindestens einer aldehydischen Komponente, die mindestens zwei C-Atome pro Molekül aufweist, und mindestens eines (Meth)Acrylat-Polymeren erhältlich ist, sowie Dispersionen, die derartige Mikrokapseln enthalten. Darüberhinaus sind Gegenstand der Erfindung die Verwendung und die Herstellung der Mikrokapseln/Mikrokapseldispersionen sowie Produkte, die derartige Mikrokapseln/Mikrokapseldispersionen enthalten und deren Verwendung. Ein weiterer Gegenstand der vorliegenden Offenbarung sind neue AMPS-Copolymere, die sich als Schutzkolloide eignen, z.B. bei der Herstellung von Mikrokapseln.

Aus dem Stand der Technik sind Mikrokapseln bekannt, die als Kernmaterial flüssige, feste oder gasförmige Stoffe enthalten können. Als Material für die Kapselwände sind beispielsweise Phenol-Formaldehyd-Polymere, Melamin-Formaldehyd-Polymere, Polyurethan, Gelatine, Polyamide oder Polyharnstoffe gebräuchlich. Weit verbreitet ist beispielsweise die Verwendung Leukofarbstoff-gefüllter Mikrokapseln zur Herstellung selbstdurchschreibender Papiere.

Aus US 3,755,190 ist bekannt, dass Kapseln aus Phenol-Formaldehyd-Polymeren brüchige Wände aufweisen. Um dies zu vermeiden, wird ein Herstellverfahren beschrieben, bei welchem vollständig hydrolysierter Polyvinylalkohol eingesetzt wird.

Dispersionen von Mikrokapseln aus Aminoplastharzen, wie Melamin-Formaldehyd-Harzen, enthalten herstellungsbedingt einen gewissen Anteil freien Formaldehyds. Es ist aus umweit- und arbeitshygienischen Gründen anzustreben, den Formaldehydgehalt so niedrig wie möglich zu halten, wenn möglich Formaldehyd ganz zu vermeiden. Zur Verringerung des Formaldehyd-Gehalts ist es üblich, Mikrokapseldispersionen auf der Basis von Melamin-Formaldehyd-Harzen Formaldehydfänger zuzusetzen. Zu den am häufigsten verwendeten Formaldehydfängern gehören Ammoniak, Harnstoff, Ethylenharnstoff und Melamin, die den Restgehalt an Formaldehyd in der Kapseldispersion reduzieren.

Aus EP-A 0 383 358 und DE-A 38 14 250 sind lichtempfindliche Materialien bekannt, die aus Mikrokapseln bestehen, deren Wände aus Melamin-Formaldehyd-Harzen gebildet werden. Zur Entfernung überschüssigen Formaldehyds wird bei der Härtung Harnstoff zugesetzt.

Bei den in der EP-A 319 337 und US 4,918,317 beschriebenen Verfahren wird Harnstoff gegen Ende der Härtung zugesetzt.

Die EP-A 0 415 273 beschreibt die Herstellung und Verwendung mono- und polydisperser Vollkugelteilchen aus Melamin-Formaldehyd-Kondensat. Zur Bindung des bei der Kondensation freiwerdenden Formaldehyds wird die Verwendung von Ammoniak, Harnstoff oder Ethylenharnstoff vorgeschlagen.

Mikrokapseln aus Melamin-Formaldehyd-Harzen, die unter Verwendung sulfonsäuregruppen-haltiger Polymere hergestellt werden, zeichnen sich durch ihre gleichmäßige Kapselgröße und Dichtigkeit aus (EP-A 0 218 887 und der EP-A 0 026 914.) Diese Kapseldispersionen enthalten jedoch noch restlichen freien Formaldehyd, dessen Anwesenheit bei der Weiterverarbeitung unerwünscht ist.

Die EP-A 0 026 914 empfiehlt daher, den Formaldehyd im Anschluss an die Härtung mit Ethylenharnstoff und/oder Melamin als Formaldehydfänger zu binden. Das Sulfonsäuregruppen-haltige Polymer der EP-A 0 026 914 liegt als Homopolymer oder als Copolymer zum Beispiel mit Hydroxy-C2- bis C4-alkylacrylaten vor.

Aus der DE 198 35 114 sind Dispersionen von Mikrokapseln auf der Basis von Melamin-Formaldehyd-Harz bekannt, wobei das Melamin-Formaldehyd-Harz teilweise verethert ist und ein wasserlösliches primäres, sekundäres oder tertiäres Amin oder Ammoniak enthält. Vor der Härtung wird als Formaldehydfänger Harnstoff zugesetzt.

Die DE 198 33 347 beschreibt ein Verfahren zur Herstellung von Mikrokapseln durch Kondensation von Melamin-Formaldehyd-Harzen und/oder deren Methylethern, wobei vor der Härtung Harnstoff oder Harnstoff, dessen Aminogruppen mit einer Ethylen- oder Propylenbrücke verbunden sind, als Formaldehydfänger zugesetzt wird. Die erhaltenen Dispersionen sind zwar formaldehydarm, durch den Zusatz von Harnstoff vor der Härtung werden jedoch die Stabilität der Mikrokapseln und die Viskosität der Mikrokapseldispersion ungünstig beeinflusst.

Die WO 01/51197 lehrt ein Verfahren zur Herstellung von Mikrokapseln durch Kondensation von Melamin-Formaldehyd-Harzen, bei dem während der Härtung ein Gemisch aus Melamin und Harnstoff zugesetzt wird.

Durch den Zusatz der genannten Formaldehydfänger zur fertigen Mikrokapseldispersion bzw. bei der Herstellung der Mikrokapseldispersion wird regelmäßig der Formaldehydgehalt der Dispersion gesenkt. Oft lässt sich jedoch der Formaldehydgehalt von Produkten, die derartige Mikrokapseldispersionen enthalten oder damit behandelt wurden auch bei Zugabe grosser Mengen an Formaldehydfänger nicht unterhalb eine bestimmte Grenze senken.

Mikrokapseln sind weiterhin aus der WO 2006/032019 A1 bekannt. Sie dienen der Verkapselung von Derivaten von Isothiazolinon, welche als Biozide oder zur Verhinderung von Fäulnis eingesetzt werden. Die Kapseln können zwei Schalen umfassen, wobei eine Schale aus Polyacrylat und eine zweite Schale aus PVA-Harnstoff-Resorcin-Glutaraldehyd besteht.

Copolymere als Schutzkolloide sind aus der EP 1 033 378 A1 bekannt. Die darin erwähnten Copolymere werden als Additiv Bohrschlämmen zugesetzt, sind besonders thermostabil und zeigen gute rheologische Eigenschaften.

Aufgabe der vorliegenden Erfindung ist es deshalb, Mikrokapseln mit einem möglichst niedrigen Formaldehydgehalt zu entwickeln bzw. bevorzugt auf die Verwendung von Formaldehyd für Mikrokapseln ganz zu verzichten.

Diese Aufgaben wird gelöst durch die erfindungsgemäßen Mikrokapseln, deren Kapselwände ein Harz umfassen, welches durch Umsetzung
a) mindestens eines aromatischen Alkohols mit
b) mindestens einer aldehydischen Komponente, die mindestens zwei C-Atome pro Molekül aufweist, und
c) mindestens eines (Meth)Acrylat-Polymeren aus der Gruppe der Copolymere von 2-Acrylamido-2-methyl-propansulfonsäure oder dessen Salzen mit einem oder mehreren Comonomeren aus der Gruppe bestehend aus 2-Hydroxypropylmethacrylat (HPMA), Pentapropylenglykolmethacrylat (PPM 5) und Hexaethylenglykolmethacrylat (PEM 6 LD),
erhältlich ist.

Die Erfindung betrifft außerdem Mikrokapseldispersionen enthaltend derartige erfindungsgemässe Mikrokapseln.

Desweiteren stellt die Erfindung ein Verfahren zur Herstellung erfindungsgemäßer Mikrokapseln und Mikrokapseldispersionen zur Verfügung, bei dem a) der mindestens eine aromatische Alkohol und b) die mindestens eine aldehydische Komponente, die mindestens zwei C-Atome pro Molekül aufweist, und c) das mindestens eine (Meth)Acrylat-Polymere, zusammengebracht und zur Reaktion gebracht werden, und später die Aushärtung der Kapseln erfolgt.

Als aromatische Alkohole sind im Rahmen der vorliegenden Erfindung Aryloxyalkanole, Arylalkanole und Oligoalkanolarylether bevorzugt. Ebenfalls bevorzugt sind aromatische Verbindungen, bei denen mindestens eine freie Hydroxygruppe, besonders bevorzugt mindestens zwei freie Hydroxy-Gruppen unmittelbar aromatisch gebunden sind, wobei es besonders bevorzugt ist, wenn mindestens zwei freie Hydroxy-Gruppen unmittelbar an einen aromatischen Ring gebunden sind und ganz besonders bevorzugt in meta Stellung zueinander angeordnet sind. Es ist bevorzugt, dass die aromatischen Alkohole ausgewählt sind aus den Phenolen, den Kresolen (o-, m- und p-Kresol), den Naphtholen (α- und β-Naphthol) und Thymol, sowie aus den Ethylphenolen, Propylphenolen, Fluorphenolen und Methoxyphenolen.

Erfindungsgemäß bevorzugte aromatische Alkohole sind außerdem solche, die bei der Herstellung von Polycarbonat-Kunststoffen (z. B. für Compact Discs, Plastikschüsseln, Babyfläschchen) und Epoxydharzlacken (z. B. für Beschichtungen von Konservendosen und Folienverpackungen) verwendet werden, insbesondere 2,2-Bis-(4-hydroxyphenyl)-propan (Bisphenol A).

Ganz besonders bevorzugt ist es, wenn der erfindungsgemäß vorliegende aromatische Alkohol ausgewählt ist aus den Phenolen mit zwei oder mehr Hydroxygruppen, vorzugsweise aus Brenzcatechin, Resorcin, Hydrochinon und 1,4-Naphthohydrochinon, Phloroglucin, Pyrogallol, Hydroxyhydrochinon, wobei insbesondere Resorcin und/oder Phloroglucin als aromatische Alkohole bevorzugt sind.

In einer Ausführungsform gelangt man zu den erfindungsgemäßen Mikrokapseln, indem der aromatische Alkohol als Ether eingesetzt wird, wobei der Ether in einer bevorzugten Ausführungsform ein Derivat der jeweiligen freien Form des erfindungsgemäß umzusetzenden aromatischen Alkohols ist und der freie Alkohol dabei ebenso vorhanden ist; dann liegt demnach eine Mischung vor. Für diesen Fall kann das molare Verhältnis zwischen der freien Form des erfindungsgemäß umzusetzenden aromatischem Alkohols und der genannten zusätzlichen Komponente (Etherform eines aromatischen Alkohols) zwischen 0:100, bevorzugt 1:1 oder 1:2 oder 1:4 betragen.

Der Vorteil der Mischung des aromatischen Alkohols mit einer Ether-Form ist darin begründet, dass damit die Reaktivität des Systems beeinflussbar ist. Insbesondere lässt sich mit der geeigneten Auswahl des Verhältnisses ein System schaffen, dessen Reaktivität in einem ausgewogenen Verhältnis zu der Lagerstabilität des Systems steht.

Als Derivate der aromatischen Alkohole sind Ester bevorzugt.

Als Aldehyde mit mindestens 2 C-Atomen sind gemäß der vorliegenden Erfindung sowohl aliphatische als auch aromatische Aldehyde bevorzugt.

Besonders bevorzugte Aldehyde sind eine oder mehrere ausgewählt aus der folgenden Gruppe Valeraldehyd, Capronaldehyd, Caprylaldehyd, Decanal, Succindialdehyd, Cyclohexancarbaldehyd, Cyclopentancarbaldehyd, 2-Methyl-1-propanal, 2-Methylpropionaldehyd, Acetaldehyd, Acrolein, Aldosteron, Antimycin A, 8'-Apo-β-caroten-8'-al, Benzaldehyd, Butanal, Chloral, Citral, Citronellal, Crotonaldehyd, Dimethylaminobenzaldehyd, Fosmidomycin, Furfural, Glutaraldehyd, Glycerinaldehyd, Glykolaldehyd, Glyoxal, Glyoxylsäure, Heptanal, 2-Hydroxybenzaldehyd, 3-Hydroxybutanal, Hydroxymethylfurfural, 4-Hydroxynonenal, Isobutanal, Isobutyraldehyd, Methacrolein, 2-Methylundecanal, Mucochlorsäure, N-Methylformamid, 2-Nitrobenzaldehyd, Nonanal, Octanal, Oleocanthal, Orlistat, Pentanal, Phenylethanal, Phycocyanin, Piperonal, Propanal, Propenal, Protocatechualdehyd, Retinal, Salicylaldehyd, Secologanin, Streptomycin, Strophanthidin, Tylosin, Vanillin, Zimtaldehyd.

Im Sinne der vorliegenden Erfindung kann die aldehydische Komponente mindestens ein oder zwei, besonders bevorzugt zwei, drei oder vier, ganz besonders bevorzugt zwei freie Aldehyd-Gruppen pro Molekül, aufweisen, wobei es bevorzugt ist, wenn als aldehydische Komponente mindestens Glyoxal, Glutar- und/oder Succindialdehyd vorliegt, besonders bevorzugt ist Glutardialdehyd.

In den erfindungsgemäßen Mikrokapseln kann das molare Verhältnis von a) dem mindestens einen aromatischen Alkohol, zu b) der mindestens einen aldehydischen Komponente im Allgemeinen zwischen 1:1 und 1:5, besonders bevorzugt zwischen 1 zu 2 und 1 zu 3 und ganz besonders bevorzugt bei Resorcin bei etwa 1 zu 2,6 liegen. Das Gewichts-Verhältnis der Komponenten a) + b) zu c), d.h. das Verhältnis der Gewichts-Summe von a) + b)) zum Gewicht der Komponente c) liegt im Allgemeinen zwischen 1 : 1 und 1: 0,01 besonders bevorzugt zwischen 1 : 0,2 und 1 : 0,05.

Bei den verwendeten (Meth)Acrylat-Polymeren kann es sich um Copolymere von Methacrylat-Monomeren und/oder Acrylat-Monomeren handeln. Der Begriff "(Meth)Acrylat" bezeichnet in dieser Anmeldung sowohl Methacrylate wie Acrylate. Die (Meth)Acrylat-Polymere sind Copolymere, eines oder mehrerer polar funktionalisierter (Meth)Acrylat-Monomere, wie sulfonsäuregruppen-haltige (Meth)Acrylat-Monomere. Die polaren Gruppen können dabei auch in Salzform vorliegen. Die (Meth)AcrylatPolymere eigenen sich als Schutzkolloide und können vorteilhaft bei der Herstellung von Mikrokapseln eingesetzt werden.

(Meth)Acrylat-Copolymere können beispielsweise aus zwei oder mehr (Meth)Acrylat-Monomeren bestehen (z.B. Acrylat + 2-Acrylamido-2-methyl-propansulfonsäure).

Beispiele für (Meth)Acrylat-Polymere sind Copolymere von sulfonsäuregruppenhaltigen (Meth)Acrylaten (z.B. 2-Acrylamido-2-methyl-propansulfonsäure oder dessen Salze (AMPS), kommerziell erhältlich als Lupasol®PA 140, BASF).

Bevorzugte (Meth)Acrylat-Polymere sind Copolymere, von 2-Acrylamido-2-methyl-propansulfonsäure oder dessen Salzen (AMPS). Bevorzugt sind Copolymere von 2-Acrylamido-2-methyl-propansulfonsäure oder dessen Salzen, z.B. Copolymere mit einem oder mehreren Comonomeren aus der Gruppe der Methacrylate. Bestimmte AMPS-Copolymere sind neu und ebenfalls Gegenstand der vorliegenden Erfindung. Nachfolgend werden bevorzugte Comonomere für AMPS genannt, diese Comonomere können jedoch auch mit anderen polar funktionalisierten (Meth)Acrylat-monomeren copolymerisiert werden:
2-Hydroxypropylmethacrylat (HPMA), Pentapropylenglykolmethacrylat (PPM 5) und Hexaethylenglykolmethacrylat (PEM 6 LD).

Die Polyalkylenglykolmethacrylate können eine Methacrylatgruppe tragen (z.B. Polyethylenglykolmonomethacrylat, Polypropylen-glykolmonomethacrylat, Polybutylenglykol-monomethacrylat, Polypentylenglykolmono-methacrylat oder Polyhexylenglykolmonomethacrylat) zwei oder mehr, bevorzugt zwei, Methacrylatgruppen tragen, wie Polyethylenglykoldimethacrylat, Polypropylenglykoldimethacrylat, Polybutylenglykoldimethacrylat, Polypentylenglykoldi-methacrylat oder Polyhexylenglykoldimethacrylat;

Beispiele bevorzugter (Meth)Acrylat-Comonomere sind nachfolgend aufgeführt:

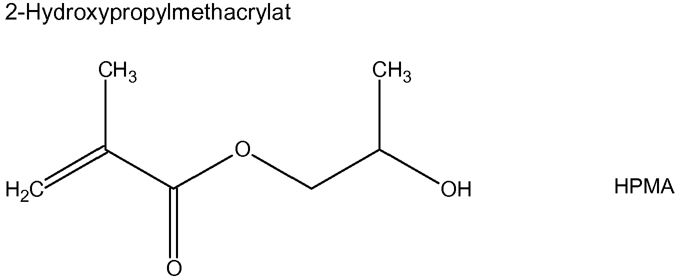

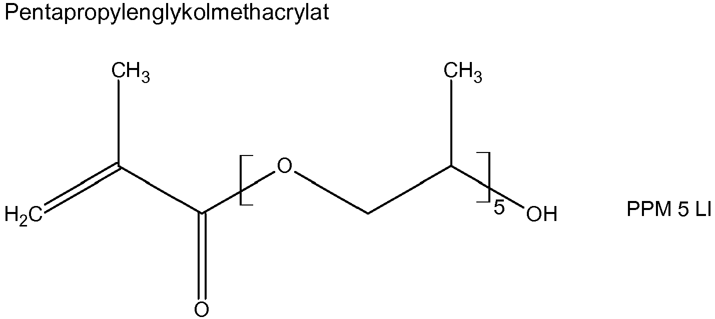

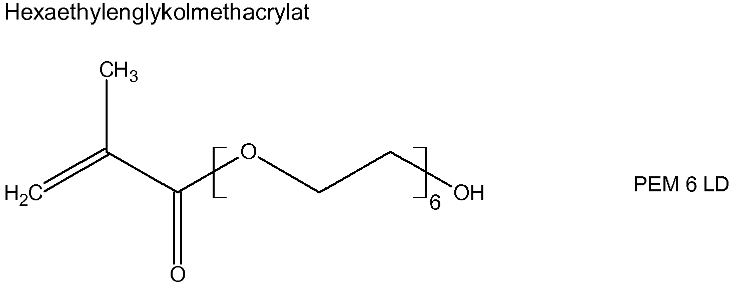

Die AMPS-Copolymere weisen im Allgemeinen einen Anteil an AMPS-Einheiten von größer 50 Mol-% auf, vorzugsweise im Bereich von 60 - 95 Mol-%, besonders bevorzugt von 80 bis 99 Mol-%, der Anteil an Comonomeren liegt im Allgemeinen kleiner 50 Mol-%, vorzugsweise im Bereich von 5 bis 40 Mol-%, besonders bevorzugt von 1 bis 20 Mol-%.

Die Copolymere können durch an sich bekannte Verfahren erhalten werden, beispielsweise im Batch- oder im Semibatch-Verfahren. Beispielsweise werden zunächst entsprechende Mengen Wasser und Monomeren in einen temperierbaren Reaktor geleitet und unter Inertgas-Atmosphäre gesetzt. Die Vorlage dann gerührt, auf Reaktionstemperatur gebracht (vorzugsweise im Bereich von ca. 70 - 80 °C) und Initiator zugesetzt, vorzugsweise in Form einer wässrigen Lösung. Als Initiator eignen sich bekannte Initiatoren für radikalische Polymerisationen, beispielsweise Natrium-, Kalium- oder Ammoniumperoxodisulfat, oder H₂O₂ basierte Mischungen, z.B. Mischungen von H₂O₂ mit Zitronensäure. Die maximale Temperatur wird abgewartet und sobald die Temperatur im Reaktor sinkt erfolgt entweder a) die Zudosierung der restlichen Monomere und anschließend eine Nachreaktion (Semibatch-Verfahren), oder b) direkt die Nachreaktion (Batch-Verfahren). Danach wird das erhaltene Reaktionsgemisch auf Raumtemperatur abgekühlt und das Copolymer aus der wässrigen Lösung isoliert, z.B. durch Extraktion mit organischen Lösungsmitteln wie Hexan oder Methylenchlorid und anschließendes Abdestillieren des Lösungsmittels. Danach kann das Copolymer mit organischem Lösungsmittel gewaschen und getrocknet werden. Das erhaltene Reaktionsgemisch kann auch direkt weiterverarbeitet werden, in diesem Falle ist es von Vorteil, der wässrigen Copolymer-Lösung ein Konservierungsmittel zuzusetzen.

Die AMPS-Copolymere eignen sich als Schutzkolloide bei der Herstellung von Mikrokapseln. Verschiedene der beschriebenen AMPS-Copolymere sind neu und somit ebenfalls Gegenstand der vorliegenden Erfindung, ebenso wie die Verwendung dieser Copolymere zur Herstellung von Mikrokapseln, beispielsweise Mikrokapseln von Phenol-Aldehyd-Polymeren wie Phenol-Formaldehyd-Polymeren, Melamin-Formaldehyd-Polymeren, Polyurethanen, Gelatine, Polyamiden oder Polyharnstoffen. Vorzugsweise eignen sich die erfindungsgemäßen Copolymere als Schutzkolloide zur Herstellung der Mikrokapseln der vorliegenden Erfindung.

Bevorzugte Mikrokapseln der vorliegenden Erfindung weisen folgende Komponenten a), b), und c) auf:
Phloroglucin, Glutardialdehyd, AMPS/Hydroxypropylmethacrylat-Copolymer; Phloroglucin, Succindialaldehyd, AMPS/Hydroxypropylmethacrylat-Copolymer; Phloroglucin, Glyoxal, AMPS/Hydroxypropylmethacrylat-Copolymer;
Phloroglucin, Glutardialdehyd, AMPS/Polyethylenglykolmonomethacrylat-Copolymer; Phloroglucin, Succindialaldehyd, AMPS/Polyethylenglykolmonomethacrylat-Copolymer; Phloroglucin, Glyoxal, AMPS/ Polyethylenglykolmonomethacrylat-Copolymer;
Phloroglucin, Glutardialdehyd, AMPS/Polypropylenglykolmonomethacrylat-Copolymer; Phloroglucin, Succindialaldehyd, AMPS/Polypropylenglykolmonomethacrylat-Copolymer; Phloroglucin, Glyoxal, AMPS/ Polypropylenglykolmonomethacrylat-Copolymer;
Resorcin, Glutardialdehyd, AMPS/Hydroxypropylmethacrylat-Copolymer; Resorcin, Succindialaldehyd, AMPS/Hydroxypropylmethacrylat-Copolymer; Resorcin, Glyoxal, AMPS/Hydroxypropylmethacrylat-Copolymer;
Resorcin, Glutardialdehyd, AMPS/Polyethylenglykolmonomethacrylat-Copolymer; Resorcin, Succindialaldehyd, AMPS/Polyethylenglykolmonomethacrylat-Copolymer; Resorcin, Glyoxal, AMPS/ Polyethylenglykolmonomethacrylat-Copolymer;
Resorcin, Glutardialdehyd, AMPS/Polypropylenglykolmonomethacrylat-Copolymer; Resorcin, Succindialaldehyd, AMPS/Polypropylenglykolmonomethacrylat-Copolymer; Resorcin, Glyoxal, AMPS/ Polypropylenglykolmonomethacrylat-Copolymer;
In einer Ausführung der Erfindung können zur Herstellung der erfindungsgemäßen Mikrokapseln zusätzlich eines oder mehrere stickstoffhaltige oder siliciumdioxidhaltige Agentien verwendet werden. Dabei können die stickstoffhaltigen Agentien in das Harz einpolymerisiert werden (z.B. um das Eigenschaftsprofil des Harzes abzurunden) oder zur Nachbehandlung verwendet werden.

Dabei kommen bevorzugt heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen zum Einsatz. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiterhin Polyamide und Dicyandiamid, Harnstoff und seine Derivate sowie Pyrrolidon und davon abgeleitete Verbindungen. Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate.

Es sei besonders betont, dass es sich bei der Nachbehandlung um eine "reine" Nachbehandlung der Oberfläche handelt, um zu dieser bevorzugten Ausführungsform der erfindungsgemäßen Mikrokapseln zu gelangen. Mit anderen Worten: in dieser bevorzugten Ausführungsform ist das besagte stickstoffhaltige Agens nicht gleichmäßig am Aufbau der gesamten Kapselwand beteiligt sondern überwiegend auf die äußere Oberfläche der Kapselwände konzentriert. Die Nachbehandlung kann auch mit Kieselgel (insb. amorphem hydrophobem Kieselgel) oder mit aromatischen Alkoholen a) erfolgen, wobei diese bevorzugt als Schlemmen eingesetzt werden.

Ein weiterer Gegenstand der vorliegenden Erfindung sind Mikrokapseldispersionen, die eine oder mehrere der erfindungsgemäßen Mikrokapseln enthalten.

Gegenstand der vorliegenden Erfindung ist außerdem die Verwendung eines erfindungsgemäß umzusetzenden aromatischen Alkohols, zur Umsetzung mit einer erfindungsgemäß umzusetzenden aldehydischen Komponente zur Ausbildung der Kapselwände von Mikrokapseln. Dabei kann der freie Alkohol oder dessen Ether auch als Mischung vorliegen. Es ist bevorzugt, dass durch die erfindungsgemäße Verwendung formaldehydfreie Mikrokapseln zur Verfügung gestellt werden. Es können dem Reaktionsgemisch allerdings geringe Mengen Formaldehyd zugesetzt werden, im Allgemeinen weniger als 0,05 Mol-Gew.% bezogen auf den Gesamtansatz, beispielsweise als Konservierungsmittel.

Der vorliegenden Erfindung liegt als weiterer Gegenstand ein Verfahren zur Herstellung der erfindungsgemäßen Mikrokapseln oder Mikrokapseldispersionen zu Grunde, wobei der mindestens eine erfindungsgemäß umzusetzende aromatische Alkohol, die mindestens eine erfindungsgemäß umzusetzende aldehydische Komponente, die mindestens zwei C-Atome pro Molekül aufweist, und mindestens ein (Meth)Acrylatpolymer, gegebenenfalls in Gegenwart mindestens einer zu verkapselnde Substanz (Kernmaterial), zusammen- und zur Reaktion gebracht werden und durch spätere Temperaturerhöhung die Aushärtung der Kapseln erfolgt. Dabei ist es besonders bevorzugt, dass der pH-Wert im Laufe des Verfahrens erhöht wird.

Vorzugweise wird im Rahmen des erfindungsgemäßen Verfahrens zunächst
a) der mindestens eine aromatische Alkohol und die mindestens eine aldehydische Komponente und mindestens ein (Meth)Acrylatpolymer und mindestens eine zu verkapselnde Substanz bei einer Temperatur von 40 bis 65°C und einem pH-Wert zwischen 6 und 9, vorzugsweise 7 und 8,5 zusammengebracht und
b) in einem späteren Verfahrensschritt bei einer Temperatur von 40 bis 65 °C der pH-Wert auf über 9, vorzugsweise zwischen 9,5 und 11 angehoben, wobei
c) später die Aushärtung der Kapseln durch Temperaturerhöhung auf 60°C bis 110°C, vorzugsweise 70°C bis 90°C, insbesondere 80 °C durchgeführt wird.

Wird jedoch Phloroglucin als Alkoholkomponente verwendet, wird vorteilhafter im Sauren gehärtet; bevorzugt liegt der pH Wert dann bei höchstens 4, insbesondere bevorzugt zwischen 3 und 4, zum Beispiel zwischen 3,2 - 3,5.

Durch die gewählten Parameter der Temperatur, des pH-Wertes und/oder der Rührgeschwindigkeit können die Ausbeute und Qualität der erfindungsgemäßen Mikrokapseln oder Mikrokapseldispersionen beeinflusst werden. Insbesondere kann eine zu niedrige Temperatur dazu führen, dass die Kapselwand weniger dicht ausgebildet wird. Dies ist dem Fachmann erkennbar an einer verminderten Ausbeute sowie Abscheidung von Kernmaterial als Kondensat im Filter des Trockners. Andererseits sollte darauf geachtet werden, dass die Reaktionsgeschwindigkeit nicht zu hoch ist, da sich sonst nur wenig Wandmaterial um die Kapseln legt, bzw. zu viel freies Wandmaterial außerhalb der Kapseln vorliegt. Dieses freie Wandmaterial kann dann in Teilchen vorliegen, die größer sind als die Kapseln.

Die Alkalität kann ebenfalls von Bedeutung für die Qualität der erfindungsgemäßen Mikrokapseln sein. Daneben beeinflusst der pH-Wert im Rahmen der Prozessführung die Tendenz zum Gelieren des Ansatzes. Sofern die Teilchenbildung (Schritt b) oben) bei einem pH-Wert von 9 oder niedriger durchgeführt wird, könnte der Ansatz gelieren.

In einer Ausführungsform des erfindungsgemäßen Verfahrens wird zum Einstellen der Alkalität ein Alkalisalz, vorzugsweise Alkalicarbonat, insbesondere Natriumcarbonat verwendet. Natriumcarbonat ist bevorzugt, da damit die Gefahr des Gelierens verringert wird.

Im Rahmen des erfindungsgemäßen Verfahrens kann zu Beginn der Umsetzung (Verfahrensschritt a)) des aromatischen Alkohols mit der aldehydischen Komponente gerührt werden, wobei die Rührgeschwindigkeit bei 500 bis 2500 U/min, insbesondere bei 1000 bis 2000 U/min liegen kann. Zu dem erhaltenen Vorkondensat kann anschließend das (Meth)Acrylat-Polymer und die zu verkapselnde Substanz zugeben werden. Vorzugsweise wird später und zwar unmittelbar vor oder während der Anhebung der Alkalität (Verfahrensschritt b) die Rührgeschwindigkeit erhöht, wobei sie dann bei 3000 bis 5000 U/min, insbesondere bei 3500 bis 4500 U/min, vor allem bei 4000 U/min liegen kann.

Vorzugsweise wird die so erhöhte Rührgeschwindigkeit so lange beibehalten, bis die Viskositätswerte der Mischung sinken, wobei nach Einsetzen einer Viskositätsabnahme die Rührgeschwindigkeit gesenkt wird, vorzugsweise auf 500 bis 2500 U/min, besonders bevorzugt auf 1000 bis 2000 U/min. Ein früheres Absenken der Rührgeschwindigkeit kann ebenfalls zum unerwünschten Gelieren des Ansatzes führen.

Vorzugsweise wird nach Beginn der beschriebenen Viskositätsabnahme mindestens 20 Minuten, besonders bevorzugt zwischen 30 und 180 Minuten bei einer Rührgeschwindigkeit von 1000 bis 2000 U/min und einer Temperatur von 40 bis 65°C weiter gerührt, bevor in Verfahrensschritt c) die Aushärtung der Kapseln durch Temperaturerhöhung erfolgt. Diese Phase nach Beginn der beschriebenen Viskositätsabnahme und vor Aushärtung der Kapseln wird in der vorliegenden Erfindung auch als Ruhephase bezeichnet. Die Ruhephase kann vorzugsweise dazu dienen, um die Präformierung ausreichend stabiler Kapselwände zu erreichen, mit anderen Worten, die Kapselwände so stabil auszubilden, dass kein Kernmaterial mehr entweicht.

Ein weiterer Gegenstand der vorliegenden Erfindung ist die Verwendung von erfindungsgemäßen Mikrokapseln oder Mikrokapseldispersionen für die kontrollierte Freisetzung von Kernmaterialen wie Wirkstoffen, die vorzugsweise ausgewählt sind aus der Gruppe der Duftstoffe, Pestizide, Herbizide, Schmiermittel, Gleitmittel, Insektizide, antimikrobiellen Wirkstoffe, pharmazeutischen Wirkstoffe, kosmetischen Wirkstoffe, Latentwärmespeicher (z.B. Wachse), Katalysatoren (z. B. organische Carbonate), Selbstheilungsagenzien (z.B. Norbornen, Dicyclopentadien), Beschichtungssysteme wie Lacke (z.B. Duftlacke), hydrophobe Wachse, hydrophobe En-Komponenten oder hydrophobe Lösungsmittel.

Außerdem sind Gegenstand der vorliegenden Erfindung Produkte, die erfindungsgemäße Mikrokapseln oder Mikrokapseldispersionen enthalten und deren Verwendung vorzugsweise auf einem Anwendungsfeld liegt, das ausgewählt ist aus den Gebieten Lacktechnologie wie Lackherstellung, Bauchemie, Dentaltechnik vorzugsweise als Bestandteil für schnell härtende Zahnfüllmassen, Selbstheilungssysteme, Kosmetik vorzugsweise für Duft- und Aromaöle, Pharmazie vorzugsweise als Wirkstoffträger, Medizintechnik, Waschen, Reinigen, Desinfizieren, Kleben, der Behandlung von Pflanzen, vorzugsweise als Fungizid, Pestizid, Insektizid, Herbizid oder Korrosionsschutz.

Die Mikrokapseln weisen im Allgemeinen einen mittleren Durchmesser von 1-1000 µm auf. Im Rahmen der vorliegenden Erfindung sind vom Begriff Mikrokapsel auch Nanokapseln umfasst, d.h. Kapseln mit einem mittleren Durchmesser < 1 µm. Die Kapseln weisen vorzugsweise einen mittleren Durchmesser von 0,1 bis 100 µm auf. Die Wandstärke kann zum Beispiel 0,05 bis 10 µm betragen.

Es ist auch die Herstellung von Vollkugeln möglich, also Kapseln, die kein Kernmaterial umschließen. Diese Vollkugeln können sogar einen mittleren Durchmesser von unter 500nm (vorzugsweise zwischen 300 und 400 nm) aufweisen. Dabei kann es sich vorzugsweise um monodisperse Vollkugeln handeln. Zur Herstellung dieser Vollkugeln kann in einer Ausführungsform Phloroglucin verwendet werden.

Die erfindungsgemäßen Vollkugeln können als Standard- oder Kontrollansatz zum Beispiel in der Medizintechnik (z.B. als Eichlösung in Partikelsizern oder Erythrozytenzählern) Verwendung finden oder als abrasiver Bestandteil in Scheuermitteln, für dekorative Effekte oder als Abstandhalter für verdruckbare Lacke mit druckempfindlichen Partikeln genutzt werden.

### Beispiel 1: Herstellung von Copolymeren (nicht Erfindungsgemäß)

### a) AMPS-Hydroxybutylacrylat (nicht erfindungsgemäß)

Für den 1500 g Ansatz werden 891 g demineralisiertes Wasser zusammen mit 585 g AMPS (50-% wässrige Lösung) und 7,5 g 4-Hydroxybutylacrylat (HBA) in den Reaktor gefüllt und unter Schutzgas-Atmosphäre gesetzt. Das Reaktionsgemisch wird unter Rühren (400 rpm) auf 75 °C aufgeheizt. Von dem wasserlöslichen Initiator Natriumperoxodisulfat werden 0,03 g in 15 g Wasser gelöst und mittels einer Spritze in den Reaktor injiziert, wenn die Reaktionstemperatur erreicht ist. Nach Erreichen der Maximaltemperatur beginnt eine Stunde Nachreaktion. Anschließend wird der Ansatz auf Raumtemperatur abgekühlt und mit 1,5 g Konservierungsmittel versetzt.

Die wässrige Lösung wird charakterisiert über die Viskosität, Festkörper-Gehalt und den pH-Wert. Die Viskosität beträgt 540 mPas (gemessen bei 20 rpm Brookfield), der Festkörper-Gehalt beträgt 21 % und der pH-Wert liegt bei 3,3. Es werden 3 g Copolymer auf eine Petrischale gegeben und 24 Stunden bei 160 °C im Trockenschrank getrocknet. Die Auswaage beträgt 0,69 g, was einer Ausbeute von 21,6 % entspricht.

### b) AMPS-Polyakylenglykolmonomethacrylat (nicht erfindungsgemäß)

Die Vorlage besteht aus 912 g demineralisiertem Wasser, 240 g AMPS und 7,5 g Poly(ethylen/propylen)glykolmonomethacrylat (Bisomer PEM 63P HD von Cognis, CAS-Nr. 589-75-9). Die Mischung wird unter Schutzgas-Atmosphäre gesetzt. Das Reaktionsgemisch wird unter Rühren (400 rpm) auf 75 °C aufgeheizt. 1,5 g Natriumperoxodisulfat werden in 15 g Wasser gelöst und mit einer Spritze in den Reaktor überführt. Nachdem die Temperatur im Reaktor ein Maximum erreicht hat und zu sinken beginnt, werden 240 g AMPS mit 83 g PEM 63P HD mittels Schlauchpumpe über einen Zeitraum von einer Stunde zu dosiert. Anschließend erfolgt eine halbstündige Nachreaktion. Anschließend wird der Ansatz auf Raumtemperatur abgekühlt und mit 1,5 g Konservierungsmittel versetzt.

Die wässrige Lösung wird charakterisiert über die Viskosität, Festkörper-Gehalt und den pH-Wert. Die Viskosität beträgt 110 mPas (gemessen bei 20 rpm Brookfield), der Festkörper-Gehalt beträgt 23 % und der pH-Wert ist 3,1. Es werden 3 g Copolymer auf eine Petrischale gegeben und 24 Stunden bei 160 °C im Trockenschrank getrocknet. Die Auswaage beträgt 0,68 g, was einer Ausbeute von 21,6 % entspricht.

### Beispiel 2: Resorcin-Kapsel

In einem 400 ml-Becherglas werden 5,5 g Resorcin unter Rühren (Rührgeschwindigkeit: etwa 1500 U/min) in 70 g Wasser gelöst und anschließend mit 2,0 g Natriumcarbonat-Lösung (20 Gew.%ig) versetzt, worauf der pH-Wert bei ca. 7,9 liegt. Diese Lösung wird auf eine Temperatur von etwa 52 °C erwärmt. Anschließend werden 25,5 g Glutardialdehyd hinzugegeben.

Das Gemisch wird weitere ca. 10 Minuten bei einer Rührgeschwindigkeit von etwa 1500 U/min und einer Temperatur von etwa 52 °C gerührt (Vorkondensationszeit). Danach werden etwa 20 g Wasser ergänzt und ca. 2 Minuten später 1 g eines der Schutzkolloide a) Copolymer 1a (nicht erfindungsgemäß), b) Copolymer 1b (nicht erfindungsgemäß) und c) Poly-AMPS (AMPS-Homopolymer) (nicht erfindungsgemäß) und wieder ca. 2 Minuten später 55 g Palatinol A (= Diethylphthalat) hinzugefügt. Direkt im Anschluss wird die Rührgeschwindigkeit auf etwa 4000 U/min erhöht und etwa zur gleichen Zeit erfolgt die Zugabe von 20,0 g Natriumcarbonat-Lösung (20 Gew.-%ig). Danach liegt der pH-Wert der Mischung bei etwa 9,7. In der Folgezeit nehmen die Viskosität und das Volumen der Mischung zu. Es wird so lange bei einer Rührgeschwindigkeit von etwa 4000 U/min weitergerührt, bis die Viskosität wieder gesunken ist. Erst danach wird die Rührgeschwindigkeit auf etwa 1500 U/min abgesenkt. Bei einer Temperatur von etwa 52 °C und etwa gleichbleibender Rührgeschwindigkeit wird der Ansatz weitere ca. 60 Minuten gerührt. Diese Phase nennt man auch Ruhephase. Im Anschluss daran wird die Mischung auf ca. 80 °C aufgeheizt und die Kapseln bei dieser Temperatur über einen Zeitraum von 3 Stunden ausgehärtet.

Kapselgrößenverteilung - D (90) 5-10 µm; Verkapselungseffizienz ca. 90 %; Trocknungsausbeute > 90 %; Festkörper der Slurry ca. 40 Gew %.

Die Wahl der Schutzkolloide sowie der Basen und Säuren zur erfolgreichen Verkapselung überstreicht einen großen Bereich, wobei bei den Basen solche bevorzugt sind, die katalytische Effekte bei der Reaktion der aromatischen Alkohole mit den Aldehyden hervorrufen. Dabei ist sowohl die Bildung von Resolen, als auch die Bildung von Novolak analogen Kapselwänden möglich.

Die erzeugten Kapseln sind formaldehydfrei und lassen sich als stabile Kern/Schale - Mikrokapseln aus der wässrigen Slurry heraus ohne Probleme zu einem trockenem fließfähigem Pulver verarbeiten.

Die Beladung der Kapseln kann mit hydrophoben Materialien gas, flüssig, fest und Substanzklassen erfolgen, welche unter den gegebenen Reaktionsbedingungen keine Neben- oder Parallelreaktionen eingehen.

### Beispiel 3: Herstellung einer Vollkugel (nicht Erfindungsgemäß)

Eine Lösung von 4,5 g Phloroglucin , 200 g Wasser und 32,2 g Glutardialdehyd - Lösung (50 %) wird 90 Minuten bei Raumtemperatur langsam gerührt.

Anschließend wird die Temperatur für 2 h bei 40 °C gehalten.

In dieser Zeit kommt es zur Bildung von Partikeln, die in diesem Fall bis zu einer Größe von 4 µm anwachsen und eine sehr enge Größenverteilung aufweisen.

Diese Partikel werden anschließend für 2 h bei 60 °C ausgehärtet. Die fertige Slurry hat einen pH Wert von 3,4.

## Patentansprüche

1. Mikrokapseln, deren Kapselwände durch Umsetzung
a) mindestens eines aromatischen Alkohols und
b) mindestens einer aldehydischen Komponente, die mindestens zwei C-Atome pro Molekül aufweist, in Gegenwart
c) mindestens eines (Meth)Acrylat-Polymeren aus der Gruppe der Copolymere von 2-Acrylamido-2-methyl-propansulfonsäure oder dessen Salzen mit einem oder mehreren Comonomeren aus der Gruppe bestehend aus 2-Hydroxypropylmethacrylat (HPMA), Pentapropylenglykolmethacrylat (PPM 5) und Hexaethylenglykolmethacrylat (PEM 6 LD) zu einem Harz und spätere Aushärtung hergestellt werden.

2. Mikrokapseln nach Anspruch 1, **dadurch gekennzeichnet, dass** der mindestens eine aromatische Alkohol pro Molekül mindestens zwei aromatisch gebundene freie Hydroxy-Gruppen aufweist.

3. Mikrokapseln nach Anspruch 1, **dadurch gekennzeichnet, dass** der mindestens eine aromatische Alkohol ausgewählt ist aus den Phenolen, vorzugsweise aus den Phenolen mit zwei oder mehr Hydroxygruppen, vorzugsweise aus Brenzcatechin, Resorcin, Hydrochinon und 1,4-Naphthohydrochinon, Phloroglucin, Pyrogallol, Hydroxyhydrochinon, besonders bevorzugt Resorcinol und/oder Phloroglucin, aus *o-m*- und *p*-Kresol, aus α- und β-Naphthol und Thymol.

4. Mikrokapseln nach einem der vorhergehenden Ansprüche, **dadurch gekennzeichnet, dass** zusätzlich zu dem aromatischen Alkohol als weitere Komponente der Ether eines aromatischen Alkohols gemäß einem der Ansprüche 1 bis 3 mit umgesetzt wird.

5. Mikrokapseln nach einem der vorhergehenden Ansprüche, **dadurch gekennzeichnet, dass** die mindestens eine aldehydische Komponente mindestens zwei freie Aldehyd-Gruppen pro Molekül aufweist.

6. Mikrokapseln nach einem der vorhergehenden Ansprüche, **dadurch gekennzeichnet, dass** die aldehydische Komponente ausgewählt ist aus Valeraldehyd, Capronaldehyd, Caprylaldehyd, Decanal, Succindialdehyd, Cyclohexancarbaldehyd, Cyclopentancarbaldehyd, 2-Methyl-1-propanal, 2-Methylpropionaldehyd, Acetaldehyd, Acrolein, Aldosteron, Antimycin A, 8'-Apo-β-caroten-8'-al, Benzaldehyd, Butanal, Chloral, Citral, Citronellal, Crotonaldehyd, Dimethylaminobenzaldehyd, Fosmidomycin, Furfural, Glutaraldehyd, Glycerinaldehyd, Glykolaldehyd, Glyoxal, Glyoxylsäure, Heptanal, 2-Hydroxybenzaldehyd, 3-Hydroxybutanal, Hydroxymethylfurfural, 4-Hydroxynonenal, Isobutanal, Isobutyraldehyd, Methacrolein, 2-Methylundecanal, Mucochlorsäure, N-Methylformamid, 2-Nitrobenzaldehyd, Nonanal, Octanal, Oleocanthal, Orlistat, Pentanal, Phenylethanal, Piperonal, Propanal, Propenal, Protocatechualdehyd, Retinal, Salicylaldehyd, Secologanin, Streptomycin, Strophanthidin, Tylosin, Vanillin, Zimtaldehyd.

7. Mikrokapseln nach einem der vorhergehenden Ansprüche, **dadurch gekennzeichnet, dass** das molare Verhältnis von
a) dem mindestens einen aromatischen Alkohol, zu
b) der mindestens einen aldehydischen Komponente, die mindestens zwei C-Atome pro Molekül aufweist,
zwischen 1 zu 2 und 1 zu 3,5, bevorzugt zwischen 1 zu 2,4 und 1 zu 2,8 und besonders bevorzugt bei 1 zu 2,6 liegt.

8. Mikrokapseln nach einem der vorhergehenden Ansprüche, **dadurch gekennzeichnet, dass** die Kapseloberfläche mit einem stickstoffhaltigen Agens, vorzugsweise mit Melamin, mit Kieselgel oder aromatischem Alkohol a) nachbehandelt wird.

9. Mikrokapseldispersion, enthaltend eine oder mehrere Mikrokapseln gemäß einem der vorhergehenden Ansprüche.

10. Verwendung eines Copolymers, enthaltend Einheiten abgeleitet von
a) 2-Acrylamido-2-methyl-propansulfonsäure (AMPS) oder dessen Salzen, und
b) einem oder mehreren Comonomeren aus der Gruppe bestehend aus 2-Hydroxypropylmethacrylat (HPMA), Pentapropylenglykolmethacrylat (PPM 5) und Hexaethylenglykolmethacrylat (PEM 6 LD),
zur Herstellung einer Mikrokapsel gemäß einem oder mehreren der Ansprüche 1 bis 8.

11. Verfahren zur Herstellung von Mikrokapseln gemäß einem oder mehreren der Ansprüche 1 bis 8 oder Mikrokapseldispersionen gemäß Anspruch 9, **dadurch gekennzeichnet, dass**
a) der mindestens einen aromatische Alkohol, die mindestens eine aldehydische Komponente, die mindestens zwei C-Atome pro Molekül aufweist, und das mindestens eine (Meth)Acrylat-Polymer, gegebenenfalls in Anwesenheit eines Kernmaterials, zusammen- und zur Reaktion gebracht werden
b) und später durch Temperaturerhöhung die Aushärtung der Kapseln erfolgt.

12. Verfahren zur Herstellung von Mikrokapseln oder Mikrokapseldispersionen nach Anspruch 11, **dadurch gekennzeichnet, dass**
a) der mindestens eine aromatische Alkohol, die mindestens eine aldehydische Komponente und mindestens ein (Meth)Acrylat-Polymer und mindestens ein Kernmaterial bei einer Temperatur von 40 bis 65°C und einem pH-Wert zwischen 6 und 9, vorzugsweise 7 und 8,5 zusammengebracht werden und
b) in einem späteren Verfahrensschritt bei einer Temperatur von 40 bis 65 °C der pH-Wert auf über 9, vorzugsweise zwischen 9,5 und 11 angehoben wird, und
c) später die Aushärtung der Kapseln durch Temperaturerhöhung auf 60°C bis 110°C, vorzugsweise 70°C bis 90°C durchgeführt wird.

13. Verfahren zur Herstellung von Mikrokapseln oder Mikrokapseldispersionen nach einem oder mehreren der Ansprüche 11 bis 12, **dadurch gekennzeichnet, dass** während der Umsetzung des aromatischen Alkohols mit der aldehydischen Komponente und dem (Meth)Acrylat-Polymeren gerührt wird.

14. Verfahren zur Herstellung von Mikrokapseln oder Mikrokapseldispersionen nach Anspruch 13, **dadurch gekennzeichnet, dass** die Rührgeschwindigkeit unmittelbar vor oder während der Anhebung der Alkalität ebenfalls erhöht wird.

15. Verfahren zur Herstellung von Mikrokapseln oder Mikrokapseldispersionen nach Anspruch 14, **dadurch gekennzeichnet, dass** die erhöhte Rührgeschwindigkeit so lange beibehalten wird, bis die Viskositätswerte der Mischung sinken, wobei nach Einsetzen einer Viskositätsabnahme die Rührgeschwindigkeit gesenkt wird, wobei vorzugsweise nach Beginn der Viskositätsabnahme mindestens 20 Minuten und vorzugsweise zwischen 30 und 180 Minuten weiter gerührt wird, bevor die Aushärtung der Kapseln durch Temperaturerhöhung erfolgt.

16. Verwendung von Mikrokapseln gemäß einem oder mehreren der Ansprüche 1 bis 8 oder Mikrokapseldispersionen gemäß Anspruch 9 für die Freisetzung von Wirkstoffen, vorzugsweise ausgewählt aus der Gruppe der Duftstoffe, Latentwärmespeicher, Lösungsmittel, Katalysatoren, Beschichtungssysteme, reaktiven (Meth)Acrylaten, En-Komponenten, antimikrobiellen Wirkstoffe, Schmiermittel, Gleitmittel, pharmazeutischen Wirkstoffe, kosmetischen Wirkstoffe, Selbstheilungsagenzien, Wachse und Pestizide wie Fungizide, Herbizide oder Insektizide.

17. Produkte, enthaltend Mikrokapseln gemäß einem oder mehreren der Ansprüche 1 bis 8 oder Mikrokapseldispersionen gemäß Anspruch 9.

## Claims

1. Microcapsules, whose capsule walls are produced, by reaction of
a) at least one aromatic alcohol and
b) at least one aldehydic component, which has at least two C atoms per molecule, in the presence of
c) at least one (meth)acrylate polymer from the group of copolymers of 2-acrylamido-2-methyl-propanesulfonic acid or its salts with one or more comonomers from the group consisting of 2-hydroxypropyl methacrylate (HPMA), penta(propyleneglycol) methacrylate (PPM 5) and hexa(ethyleneglycol) methacrylate (PEM 6 LD) to form a resin which is hardened later.

2. Microcapsules according to claim 1, **characterised in that** the at least one aromatic alcohol per molecule has at least two aromatically bonded free hydroxyl groups.

3. Microcapsules according to claim 1, **characterised in that** the at least one aromatic alcohol is selected from the phenols, preferably from the phenols with two or more hydroxyl groups, preferably from pyrocatechol, resorcinol, hydroquinone and 1,4-naphtho hydroquinone, phloroglucinol, pyrogallol, hydroxyhydroquinone, of which resorcinol and/or phloroglucinol are particularly preferred, from *o*- *m*- and *p*-cresol, from α- and β-naphthol and thymol.

4. Microcapsules according to any one of the preceding claims, **characterised in that,** in addition to the aromatic alcohol, the ether of an aromatic alcohol according to any one of claims 1 to 3 is also reacted as a further component.

5. Microcapsules according to any one of the preceding claims, **characterised in that** the at least one aldehydic component has at least two free aldehydic groups per molecule.

6. Microcapsules according to any one of the preceding claims, **characterised in that** the aldehydic component is selected from valeraldehyde, caproaldehyde, caprylaldehyde, decanal, succindialdehyde, cyclohexanecarbaldehyde, cyclopentanecarbaldehyde, 2-methyl-1-propanal, 2-methylpropionaldehyde, acetaldehyde, acrolein, aldosterone, antimycin A, 8'-apo-β-caroten-8'-al, benzaldehyde, butanal, chloral, citral, citronellal, crotonaldehyde, dimethylaminobenzaldehyde, fosmidomycin, furfural, glutaraldehyde, glyceraldehyde, glycolaldehyde, glyoxal, glyoxylic acid, heptanal, 2-hydroxybenzaldehyde, 3-hydroxybutanal, hydroxymethylfurfural, 4-hydroxynonenal, isobutanal, isobutyraldehyde, methacrolein, 2-methylundecanal, mucochloric acid, n-methylformamide, 2-nitrobenzaldehyde, nonanal, octanal, oleocanthal, orlistat, pentanal, phenylethanal, piperonal, propanal, propenal, protocatechualdehyde, retinal, salicylaldehyde, secologanin, streptomycin, strophanthidin, tylosin, vanillin, cinnamic aldehyde.

7. Microcapsules according to any one of the preceding claims, **characterised in that** the molar ratio of
a) the at least one aromatic alcohol to
b) the at least one aldehydic component, which has at least two C atoms per molecule,
is between 1 to 2 and 1 to 3.5, preferably between 1 to 2.4 and 1 to 2.8 and particularly preferably is between 1 to 2.6.

8. Microcapsules according to any one of the preceding claims, **characterised in that** the capsule surface is treated afterwards with an agent containing nitrogen, preferably with melamine, with silica gel or aromatic alcohol a).

9. Microcapsule dispersion, containing one or more microcapsules according to any one of the preceding claims.

10. Application of a copolymer, containing units derived from
a) 2-acrylamido-2-methyl-propanesulfonic acid (AMPS) or its salts, and
b) one or more comonomers from the group consisting of 2-hydroxypropyl methacrylate (HPMA), penta(propyleneglycol) methacrylate (PPM 5) and hexa(ethyleneglycol) methacrylate (PEM 6 LD),
to produce a microcapsule according to one or more of claims 1 to 8.

11. Method for manufacturing microcapsules according to one or more of claims 1 to 8 or microcapsule dispersions according to claim 9, **characterised in that**
a) the at least one aromatic alcohol, the at least one aldehydic component, which has at least two C atoms per molecule, and the at least one (meth)acrylate polymer, if necessary in the presence of a core material, are collected together and are reacted
b) and the hardening of the capsules takes place later by raising the temperature.

12. Method for manufacturing microcapsules or microcapsule dispersions according to claim 11, **characterised in that**
a) the at least one aromatic alcohol, the at least one aldehydic component and at least one (meth)acrylate polymer and at least one core material are collected together at a temperature of 40 to 65°C and a pH value between 6 and 9, preferably 7 and 8.5 and
b) are raised, in a later method step, at a temperature of 40 to 65 °C to a pH value of over 9, preferably between 9.5 and 11, and
c) the hardening of the capsules is performed later by raising the temperature to 60°C to 110°C, preferably 70°C to 90°C.

13. Method for manufacturing microcapsules or microcapsule dispersions according to one or more of claims 11 to 12, **characterised in that** stirring takes place during the reaction of the aromatic alcohol with the aldehydic component and the (meth)acrylate polymers.

14. Method for manufacturing microcapsules or microcapsule dispersions according to claim 13, **characterised in that** the stirring speed is raised immediately before or during the raising of the alkalinity also.

15. Method for manufacturing microcapsules or microcapsule dispersions according to claim 14, **characterised in that** the raised stirring speed is maintained until the viscosity values of the mixture fall, at which point the stirring speed is reduced after the onset of a reduction in viscosity, wherein, preferably after the start of the reduction in viscosity, stirring continues for at least 20 minutes, and preferably between 30 and 180 minutes, before the capsules are hardened by raising the temperature.

16. Application of microcapsules according to one or more of claims 1 to 8 or microcapsule dispersions according to claim 9 for the release of active substances, preferable selected from the group of fragrances, latent heat accumulators, solvents, catalysts, coating systems, reactive (meth)acrylates, En-components, active antimicrobial substances, greases, lubricants, active pharmaceutical substances, active cosmetic substances, self-healing agents, waxes and pesticides, such as fungicides, herbicides or insecticides.

17. Products containing microcapsules according to one or more of claims 1 to 8 or microcapsule dispersions according to claim 9.

## Revendications

1. Microcapsules, dont les parois de capsules sont fabriquées par mise en réaction de :
a) au moins un alcool aromatique et
b) au moins un composant aldéhydique, qui comprend au moins deux atomes C par molécule, en présence de :
c) au moins un polymère de (méth)acrylate du groupe des copolymères de l'acide 2-acrylamido-2-méthyl-propanesulfonique ou ses sels avec un ou plusieurs comonomères du groupe constitué par le méthacrylate de 2-hydroxypropyle (HPMA), le méthacrylate de pentapropylène glycol (PPM 5) et le méthacrylate d'hexaéthylène glycol (PEM 6 LD) en une résine, et durcissement ultérieur.

2. Microcapsules selon la revendication 1, **caractérisées en ce que** ledit au moins un alcool aromatique comprend au moins deux groupes hydroxy libres reliés aromatiquement par molécule.

3. Microcapsules selon la revendication 1, **caractérisées en ce que** ledit au moins un alcool aromatique est choisi parmi les phénols, de préférence parmi les phénols contenant deux groupes hydroxy ou plus, de préférence parmi la brenzcatéchine, la résorcine, l'hydroquinone et la 1,4-naphtohydroquinone, la phloroglucine, la pyrogallol, l'hydroxyhydroquinone, de manière particulièrement préférée le résorcinol et/ou la phloroglucine, parmi l'o-, le m- et le p-crésol, parmi l'α- et le β-naphtol et le thymol.

4. Microcapsules selon l'une quelconque des revendications précédentes, **caractérisées en ce que** l'éther d'un alcool aromatique selon l'une quelconque des revendications 1 à 3 est mis en réaction en plus de l'alcool aromatique en tant que composant supplémentaire.

5. Microcapsules selon l'une quelconque des revendications précédentes, **caractérisées en ce que** ledit au moins un composant aldéhydique comprend au moins deux groupes aldéhyde libres par molécule.

6. Microcapsules selon l'une quelconque des revendications précédentes, **caractérisées en ce que** le composant aldéhydique est choisi parmi le valéraldéhyde, le capronaldéhyde, le caprylaldéhyde, le décanal, le succindialdéhyde, le cyclohexane-carbaldéhyde, le cyclopentane-carbaldéhyde, le 2-méthyl-1-propanal, le 2-méthylpropionaldéhyde, l'acataldéhyde, l'acroléine, l'aldostérone, l'antimycine A, le 8'-apo-β-carotén-8'-al, le benzaldéhyde, le butanal, le chloral, le citral, le citronellal, le crotonaldéhyde, le diméthylaminobenzaldéhyde, la fosmidomycine, le furfural, le glutaraldéhyde, le glycérine-aldéhyde, le glycol-aldéhyde, le glyoxal, l'acide glyoxylique, l'heptanal, le 2-hydroxybenzaldéhyde, le 3-hydroxybutanal, l'hydroxyméthylfurfural, le 4-hydroxynonénal, l'isobutanal, l'isobutyraldéhyde, la méthacroléine, le 2-méthylundécanal, l'acide mucochlorique, le N-méthylformamide, le 2-nitrobenzaldéhyde, le nonanal, l'octanal, l'oléocanthal, l'orlistat, le pentanal, le phényléthanal, le pipéronal, le propanal, le propénal, le protocatéchualdéhyde, le rétinal, le salicylaldéhyde, la sécologanine, la streptomycine, la strophanthidine, la tylosine, la vanilline, le cinnamaldéhyde.

7. Microcapsules selon l'une quelconque des revendications précédentes, **caractérisées en ce que** le rapport molaire entre
a) ledit au moins un alcool aromatique et
b) ledit au moins un composant aldéhydique, qui comprend au moins deux atomes C par molécule,
est compris entre 1 sur 2 et 1 sur 3,5, de préférence entre 1 sur 2,4 et 1 sur 2,8, et de manière particulière particulièrement est de 1 sur 2,6.

8. Microcapsules selon l'une quelconque des revendications précédentes, **caractérisées en ce que** la surface des capsules est post-traitée avec un agent contenant de l'azote, de préférence avec de la mélamine, avec un gel de silice ou un alcool aromatique a).

9. Dispersion de microcapsules, contenant une ou plusieurs microcapsules selon l'une quelconque des revendications précédentes.

10. Utilisation d'un copolymère, contenant des unités dérivées de :
a) l'acide 2-acrylamido-2-méthyl-propanesulfonique (AMPS) ou ses sels, et
b) un ou plusieurs comonomères du groupe constitué par le méthacrylate de 2-hydroxypropyle (HPMA), le méthacrylate de pentapropylène glycol (PPM 5) et le méthacrylate d'hexaéthylène glycol (PEM 6 LD),
pour la fabrication d'une microcapsule selon une ou plusieurs des revendications 1 à 8.

11. Procédé de fabrication de microcapsules selon une ou plusieurs des revendications 1 à 8 ou de dispersions de microcapsules selon la revendication 9, **caractérisé en ce que**
a) ledit au moins un alcool aromatique, ledit au moins un composant aldéhydique, qui comprend au moins deux atomes C par molécule, et ledit au moins un polymère de (méth)acrylate sont rassemblés et mis en réaction, éventuellement en présence d'un matériau de noyau,
b) et ultérieurement, le durcissement des capsules a lieu par élévation de la température.

12. Procédé de fabrication de microcapsules ou de dispersions de microcapsules selon la revendication 11, **caractérisé en ce que**
a) ledit au moins un alcool aromatique, ledit au moins un composant aldéhydique et ledit au moins un polymère de (méth)acrylate et au moins un matériau de noyau sont rassemblés à une température de 40 à 65 °C et à un pH compris entre 6 et 9, de préférence entre 7 et 8,5, et
b) lors d'une étape de procédé ultérieure, le pH est augmenté à plus de 9, de préférence entre 9,5 et 11, à une température de 40 à 65 °C, et
c) ultérieurement, le durcissement des capsules est réalisé par élévation de la température à 60 °C à 110 °C, de préférence 70 °C à 90 °C.

13. Procédé de fabrication de microcapsules ou de dispersions de microcapsules selon une ou plusieurs des revendications 11 à 12, **caractérisé en ce qu'une** agitation a lieu pendant la mise en réaction de l'alcool aromatique avec le composant aldéhydique et le polymère de (méth)acrylate.

14. Procédé de fabrication de microcapsules ou de dispersions de microcapsules selon la revendication 13, **caractérisé en ce que** la vitesse d'agitation est également augmentée directement avant ou pendant l'élévation de l'alcalinité.

15. Procédé de fabrication de microcapsules ou de dispersions de microcapsules selon la revendication 14, **caractérisé en ce que** la vitesse d'agitation augmentée est maintenue jusqu'à ce que les valeurs de viscosité du mélange chutent, la vitesse d'agitation étant abaissée après le début d'une diminution de la viscosité, l'agitation étant de préférence poursuivie pendant au moins 20 minutes après le début de la diminution de la viscosité et de préférence pendant entre 30 et 180 minutes, avant que le durcissement des capsules n'ait lieu par élévation de la température.

16. Utilisation de microcapsules selon une ou plusieurs des revendications 1 à 8 ou de dispersions de microcapsules selon la revendication 9 pour la libération d'agents actifs, de préférence choisi dans le groupe constitué par les parfums, les accumulateurs de chaleur latents, les solvants, les catalyseurs, les systèmes de revêtement, les (méth)acrylates réactifs, les composants « ène », les agents actifs antimicrobiens, les lubrifiants, les agents glissants, les agents actifs pharmaceutiques, les agents actifs cosmétiques, les agents de régénération spontanée, les cires et les pesticides tels que les fongicides, les herbicides ou les insecticides.

17. Produits, contenant des microcapsules selon une ou plusieurs des revendications 1 à 8 ou des dispersions de microcapsules selon la revendication 9.
